# EUROPÄISCHE PATENTANMELDUNG

(11) **EP 0 744 616 A1**
(43) Veröffentlichungstag der Anmeldung: **27.11.1996**
(21) Anmeldenummer: 96108336.7
(22) Anmeldetag: 24.05.1996
(51) Int. Cl.: G01N 21/89

(54) **Optischer Sensor, insbesondere für eine Bahnlaufregeleinrichtung**

(30) Priorität: 24.05.1995 DE 19519055
(71) Anmelder: BST SERVO-TECHNIK GmbH, D-33507 Bielefeld (DE)
(72) Erfinder: Schrauwen, Hans Joachim, 32120 Hiddenhausen (DE)
(74) Vertreter: Klingseisen, Franz, Dipl.-Ing.

(57) **Zusammenfassung**

Bei einem optischen Sensor mit einer Zeilenkamera (5) und einem Objektiv (4) zum Abtasten eines von einer Lichtquelle beleuchteten Bereichs (3), insbesondere bei einer Bahnlaufregeleinrichtung, wird zur Kompensation von Störstellen vor der Zeilenkamera (5) ein optisches Element (7) angeordnet, welches eine Vergrößerung des abgetasteten Bereichs auf die Zeilenkamera (5) fokussiert.

## Beschreibung

Die Erfindung betrifft einen optischen Sensor mit einer CCD-Zeilenkamera und einem Objektiv zum Abtasten eines von einer Lichtquelle beleuchteten Bereichs, bspw. einer Leitlinie auf einer laufenden Bahn, deren Lauf überwacht werden soll.

Beim Abtasten eines von einer Lichtquelle auf eine Materialbahn geworfenen Lichtflecks von bspw. 8mm Durchmesser treten Störstellen, wie bspw. besonders stark reflektierende Punkte auf der Materialbahn, auf, die bei einem großflächigen Bildsensor zu keiner Signalverfälschung führen, weil die einzelnen Störstellen mit der gesamten abgebildeten Fläche aufgenommen werden, so daß die Störstellen das Gesamtsignal nicht beeinflussen. Mit anderen Worten gehen die Störstellen in der abgetasteten Fläche unter. Bei einer Zeilenkamera mit bspw. etwa 2000 lichtempfindlichen Zellen über die Länge der Kamera ist der lichtempfindliche Bereich aber nur etwa 14 µ breit, so daß sich Störstellen auf dem abzutastenden Material wesentlich stärker auswirken und zu Verfälschungen des von der Zeilenkamera abgegebenen Signals führen, wenn bspw. eine Störstelle auf der gerade abgetasteten Linie liegt und zu einem entsprechenden Signalausschlag führt.

Der Erfindung liegt die Aufgabe zugrunde, einen optischen Sensor der eingangs angegebenen Art so auszubilden, daß Störstellen auf dem abzutastenden Material nicht zu einer Signalverfälschung führen.

Diese Aufgabe wird erfindungsgemäß dadurch gelöst, daß vor der Zeilenkamera eine Linse angeordnet wird, welche eine Vergrößerung der abgetasteten Fläche auf die Zeilenkamera fokussiert. Vorzugsweise wird eine stabförmige Linse vorgesehen, die sich in Richtung der Zeilenkamera erstreckt.

Durch die Fokussierung einer Vergrößerung des abzutastenden Bereichs wird zwar auch eine eventuelle Störstelle, bspw. auf einer Leitlinie, vergrößert, jedoch erfaßt die Zeilenkamera durch die vergrößerte Abbildung zugleich auch einen nicht gestörten Bereich der Leitlinie, so daß sich durch die Vergrößerung der Abbildung insgesamt eine Kompensation der Störstelle durch eine Mittelung der erfaßten Lichtintensität ergibt.

Da eine Vergrößerung durch die stabförmige Linse nur in Richtung der Leitlinie erfolgt, wird die Auflösung quer zur Leitlinie nicht verändert.

Die Erfindung wird beispielsweise anhand der Zeichnung näher erläutert. Es zeigen
- Fig. 1: in einer schematischen, perspektivischen Darstellung die Anordnung des Sensors über einer Materialbahn,
- Fig. 2: schematisch den Strahlengang des Sensors, und
- Fig. 3: anhand eines Signalverlaufs die Wirkung der stabförmigen Linse.

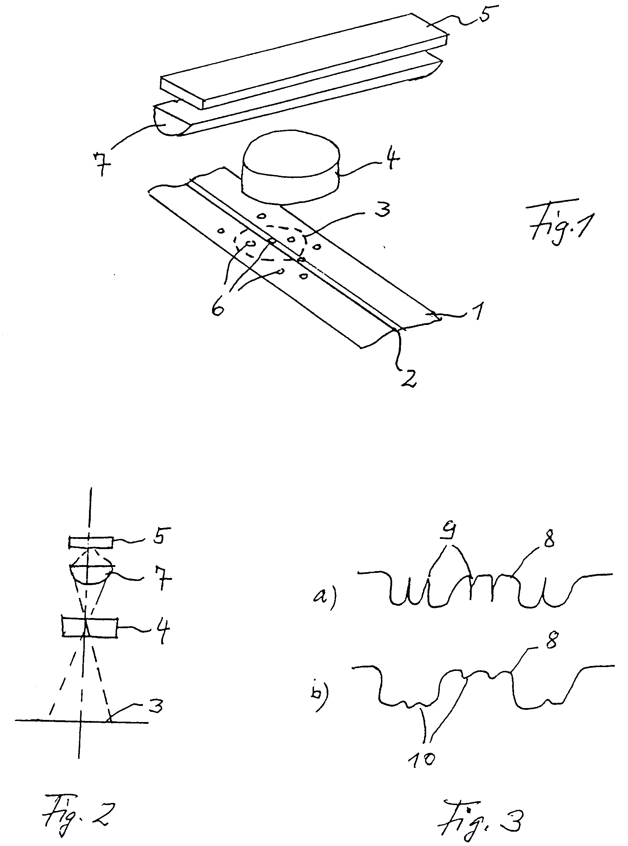

In Fig. 1 ist mit 1 eine laufende Materialbahn bezeichnet, längs der eine Leitlinie 2 verläuft, die bspw. auf die Bahn aufgedruckt ist und zur Bahnlaufregelung dient. Durch eine nicht dargestellte Lichtquelle wird auf der Materialbahn 1 im Bereich der Leitlinie 2 ein Lichtfleck 3 ausgebildet, über dem ein Objektiv 4 zum Abbilden des Lichtfleckes auf einer darüber angeordneten Zeilenkamera 5 angeordnet ist, wobei die CCD-Zeilenkamera quer zur Leitlinie 2 angeordnet ist. Dieser Aufbau ist an sich bekannt.

Auf der Materialbahn 1 sind bei 6 punktförmige Störstellen angedeutet, die aufgrund von Ablagerungen oder Materialeigenschaften verstärkt Licht reflektieren bzw. in ihrer Intensität erheblich von der ihrer Umgebung abweichen. Befindet sich beispielsweise eine solche Störstelle 6 auf der Leitlinie, so wird bei der herkömmlichen Ausgestaltung durch die linienförmige Abtastung quer zur Leitlinie im Bereich der Leitlinie im wesentlichen nur die Störstelle erfaßt, so daß es zu einer Signalverfälschung kommt.

Erfindungsgemäß wird vor der Zeilenkamera 5 eine Linse 7 angeordnet, die einen breiteren Streifen auf der Zeilenkamera abbildet, insbesondere eine sich über die Länge der Zeilenkamera 5 erstreckende und quer zur Leitlinie 2 angeordnete stabförmige Linse, so daß die Zeilenkamera nicht nur die Störstelle, sondern auch vor und hinter der Störstelle liegende Bereiche der Leitlinie erfaßt, wodurch sich eine Mittelung der erfaßten Lichtintensität ergibt und die Störstelle keinen so ausgeprägten Einfluß auf das abgegebene Signal hat.

Fig. 2 zeigt schematisch den Strahlenverlauf bei der beschriebenen Sensoranordnung, während Fig. 3 bei a) einen Signalverlauf ohne und bei b) einen Signalverlauf mit Linse 7 wiedergibt. Der erhöhte Signalpegel bei 8 gibt die Leitlinie wieder, wobei mit 9 in Fig. 3a) die durch Störstellen 6 hervorgerufenen Signalausschläge bezeichnet sind. Demgegenüber treten bei dem Signalverlauf nach Fig. 3b) aufgrund der Wirkung der Linse 7 nur geringe Signaländerungen bei 10 auf, bei in übrigen gleicher Verteilung der Störstellen.

Der beschriebene Sensor ist insbesondere für eine Bahnlaufregeleinrichtung vorgesehen, kann aber auch für andere Abtastvorgänge eingesetzt werden, bei denen durch Störstellen im Abtastbereich Signalverfälschungen bei einer Zeilenkamera auftreten können.

Anstelle der beschriebenen Anordnung einer gesonderten stabförmigen Linse 7 kann auch ein anderes optisches Element verwendet werden, mittels dessen die erwünschte Vergrößerung der Abbildung in Richtung der Leitlinie erreicht wird. So ist es auch möglich, eine Prismenanordnung vorzusehen. Nach einer anderen Ausgestaltung kann in das Objektiv 4 eine Vergrößerung der Leitlinie integriert werden, so daß sich der gleiche Effekt wie durch die stabförmige Linse 7 ergibt.

## Patentansprüche

1. Optischer Sensor mit einer Zeilenkamera (5) und einem Objektiv (4) zum Abtasten eines von einer Lichtquelle beleuchteten Bereichs (3), insbesondere bei einer Bahnlaufregeleinrichtung,
dadurch gekennzeichnet,
daß vor der Zeilenkamera (5) ein optisches Element (7) angeordnet ist, welches eine Vergrößerung des abgetasteten Bereichs auf die Zeilenkamera (5) fokussiert.

2. Sensor nach Anspruch 1,
dadurch gekennzeichnet,
daß das optische Element als stabförmige Linse (7) ausgebildet ist,
die sich in Richtung der Zeilenkamera erstreckt.

3. Sensor nach Anspruch 1,
dadurch gekennzeichnet,
daß das optische Element (7) zur Vergrößerung des abgetasteten Bereichs in das Objektiv (4) integriert ist.
